# EUROPEAN PATENT APPLICATION

(11) **EP 1 796 325 A1**
(43) Date of publication of application: **13.06.2007**
(21) Application number: 05788260.7
(22) Date of filing: 30.09.2005
(51) Int. Cl.: H04L 12/56

(54) **MOBILE COMMUNICATION ACCESS SYSTEM, EDGE DEVICE, PACKET TRANSFER DEVICE, AND PACKET LOSS REDUCING METHOD**

(30) Priority: 30.09.2004 JP 2004289336
(71) Applicant: MATSUSHITA ELECTRIC INDUSTRIAL CO., LTD., Osaka 571-8501 (JP)
(72) Inventor: KAWAKAMI, Tetsuya, Matsushita Elect. Industrial Co,Ltd., Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/018121
(87) International publication number: WO 2006/035930

(57) **Abstract**

A technology providing a mobile communication access system and the like that can keep packet replication to a minimum and actualize a soft handover while efficiently using a network is disclosed. According to the technology, a first edge device 101 generates a label within a packet including a label value field and an activation state information field. The label value field stores a label value specifying a label switch path. The activation state information field stores activation state information of second edge devices 1 to 4 disposed on the label switch path. In addition, the first edge device 101 transmits the packet to packet transfer devices 102 to 104 disposed along the label switch path controlled based on the activation state information. The packet transfer devices transfer the packet to the second edge device that is a transfer destination specified by the label switch path.

## Description

### TECHNICAL FIELD

The present invention relates to a mobile communication access system, an edge device, a packet transfer device, and a packet loss reducing method for performing a handover control using a soft handover when a label switching technology is applied to a mobile terminal. The label switching technology transfers data using a label, such as Multi-Protocol label Switching (MPLS).

### BACKGROUND ART

In conventional label switching technology, a standard protocol technology for configuring a Label Switching Path (LSP) is disclosed in Non-Patent document 1, described below. The technology disclosed in Non-Patent document 1 is a protocol that configures a point-to-point path. The technology allows configuration of a label switch path through conversion of a PATH message and a Resv message between an ingress Label Switch Router (LSR) and an egress LSR that become edges. The technology also allows performance of band reservation. The technology can indicate a specific path and configure the path for traffic engineering. On the other hand, standardization for configuring a point-to-multipoint path, such as multicast, is currently being performed. A technology for the standardization is disclosed in Non-Patent document 2, described below. The technology disclosed in Non-Patent document 2 configures the point-to-multipoint path by merging a plurality of point-to-point paths in a branch LSR that becomes a branch point by using a shared session object.

Regarding application to a mobile terminal in MPLS, several methods for performing a change in a path to a new Internet Protocol (IP) address triggered by a change in an IP address through coordination with a mobile IP are proposed. In the coordination with the mobile IP, a change in the LSP is performed using a binding update of a new Care of Address (CoA) outputted after a handover of a terminal. As a result, a high-speed handover is difficult to perform. Therefore, to actualize an access network connecting a mobile terminal and an Internet Service Provider (ISP), a following can be considered. The LSP is handled as a layer 2 tunnel. As a result, a handover process is performed in only the layer 2 by the change in the LSP, without performing the layer 3 handover process (mobile IP process) . When the method using the LSP as the layer 2 tunnel is applied to a mobile communication system, the method is applied to the mobile terminals by respective LSP being set for each mobile terminal and the path of the LSP assigned to a mobile terminal being changed in accompaniment with the movement of the mobile terminal. A soft handover serves as a method for reducing packet loss in the handover method during mobile communication. The soft handover performs a replication of the packet for the path of a movement destination as well, in advance, before movement and performs packet transfer, thereby preventing a disconnection in communication during handover. When the soft handover is performed in an access network using MPLS, following problems occur when conventional signaling and transfer methods are used.

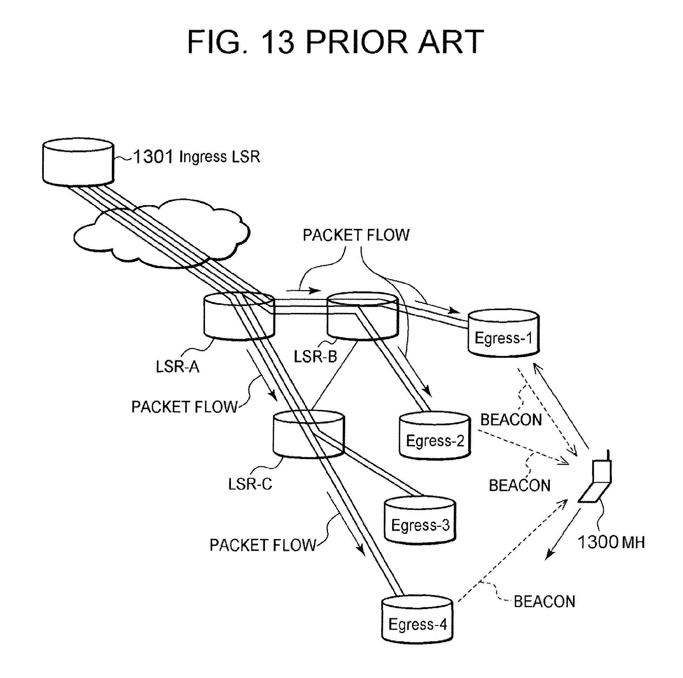

First, an actualization of a reduction in packet loss using a plurality of point-to-point LSP will be described with reference to Fig. 13. Fig. 13 shows an access network using MPLS. Specifically, an Ingress LSR 1301, a Mobile Host (MH) 1300, Egress-1 to 4, and LSR-A to C are shown. The Ingress LSR 1301 is connected to an external network and becomes a MPLS edge device. The MH 1300 is a mobile terminal. The Egress-1 to 4 are edge devices receiving the MH 1300. The LSR-A to C become label switching relay devices. In an example using point-to-point LSP, for example, the MH 1300 generates a list 1 of a plurality of Egresses that can receive radio waves. The MH 1300 notifies the Ingress LSR 1301 of the list 1 through the Egress-1 1 that is currently in communication. The MH 1300 0 sets a plurality of point-to-point LSP for the MH 1300 in advance. Next, the MH 1300 generates a list 2 related to the Egresses having an electric field strength that is equal to or more than a certain threshold value and similarly notifies the Ingress LSR 1301 of the list 2. In accordance with the list 2, the Ingress LSR 1301 decides the LSP for actually transferring a packet. When a plurality of LSP are on the list 2, the Ingress LSR 1301 replicates the packet and transmits the same packet to the plurality of LSP.

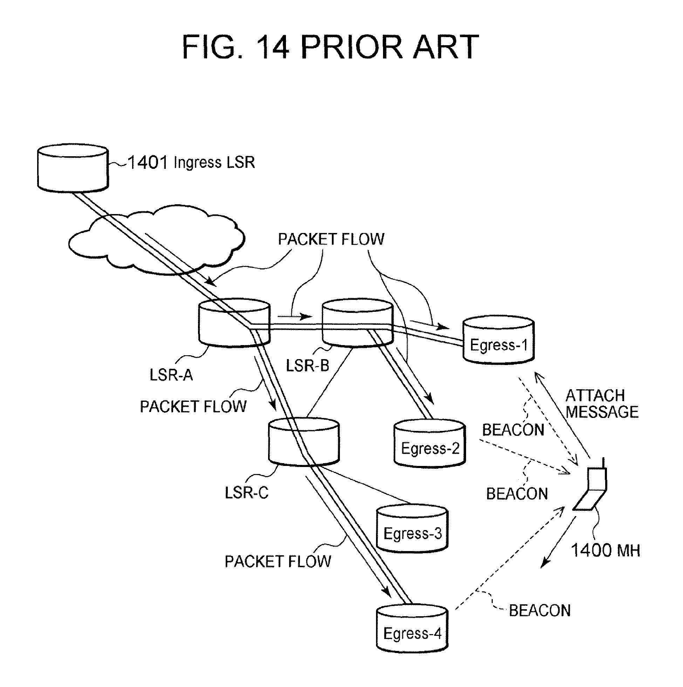

Next, an actualization of the reduction of packet loss using the point-to-multipoint LSP will be described with reference to Fig. 14. Fig. 14 shows a same network configuration as that in Fig. 13. In an example using point-to-multipoint, an MH 1400 generates a list 3 related to the Egresses having an electric field strength that is equal to or more than a certain threshold value and notifies an Ingress LSR 1401 of the list 3 through the Egress-1 that is currently in communication. The Ingress LSR 1401 that has received the notification performs a change in the point-to-multipoint for the relevant MH 1400 based on the list 3. Specifically, the Ingress LSR 1401 performs an addition or a deletion of a branch LSP. When signaling for configuring the point-to-multipoint is completed, the packet of the relevant MH 1400 is transferred over a new point-to-multipoint. At this time, the LSR to become the branch point performs the packet replication. Therefore, a load of packet replication placed on the Ingress LSR 1401 is eliminated. However, the packet replication is performed when the LSP is constructed. When considering handling when the mobile terminal MH 1400 moves at a high speed, the following two demands are required to be met. A first demand is that a path should be constructed as soon as possible. A second demand is that the path should be constructed over as wide a range as possible.
Non-Patent document 1: "RSVP-TE:Extensions to R SVP for LSP Tunnels", IETF Standards, RFC3209
Non-Patent document 2: "Establishing Point to M ultipoint MPLS TE LSPs", draft-raggarwa-mpls-p2mp-te -02.txt

However, as described above, when the point-to-point LSP is used, a same packet is replicated and transferred even for a shared path section when a plurality of LSP are used, thereby causing a redundant use of the band. In addition, there is a problem in that, because the Ingress LSR 1301 performs all control of the plurality of LSP and packet replications, the load placed on the Ingress LSR 1301 is extremely large. Furthermore, when the point-to-multipoint LSP is used, the packet replication is performed when the LSP is constructed. As a result, there is a problem in that, in terms of network efficiency, excessive band is needlessly wasted at an early stage and the band is wasted over an unnecessarily wide range.

### DISCLOSURE OF THE INVENTION

The present invention has been achieved to solve the above-described problems. An object of the present invention is to provide a mobile communication access system, an edge device, a packet transfer device, and a packet loss reducing method that can minimize packet replication and actualize soft handover while efficiently using a network.

In order to achieve the object, according to the present invention, a mobile communication access system that constructs a point-to-multipoint label switch path to allow a mobile terminal and an external network to be connected via an access network is provided. The access network includes a first edge device, second edge devices, and packet transfer devices. The first edge device is connected to the external network and is disposed on an edge of the access network. The second edge devices can be connected to the mobile terminal and are disposed on an edge of the access network. The packet transfer devices belong to the access network and relay and transfer a packet transmitted between the first edge device and the second edge devices. The first edge device generates a label within the packet that includes a label value field and an activation state information field. The label field stores a label value specifying a label switch path. The activation state information field stores activation state information of the second edge devices disposed on the label switch path. In addition, the first edge device transmits the packet to the packet transfer devices disposed along the label switch path controlled based on the activation state information. The packet transfer devices transfer the packet to the second edge device that is a transfer destination designated by the label switch path. As a result of the configuration, packet replication is kept to a minimum, and a soft handover can be actualized while efficiently using the network.

In addition, in the mobile communication access system of the present invention, a preferred aspect of the present invention is that the activation state information is information designating the second edge devices to which the packet should be transferred by a request from the mobile terminal. As a result of the configuration, only specific second edge devices can be selected.

In addition, in the mobile communication access system of the present invention, a preferred aspect of the present invention is that the first edge device constructs the label switch path using information on the second edge devices having a possibility of communicating with the mobile terminal, of which notification has been given from the mobile terminal. Furthermore, a preferred aspect of the present invention is that the first edge device receives a notification from the mobile terminal of the second edge devices to which the mobile terminal requests the transfer of the packet, among the second edge devices having the possibility of communicating with the mobile terminal, and stores the respective activation state information of the second edge devices of which the notification has been received in the label. As a result of the configuration, only specific second edge devices requested by the mobile terminal can be selected.

In the mobile communication access system of the present invention, a preferred aspect of the present invention is that the first edge device maps the second edge devices having the possibility of communicating with the mobile terminal, listed by the mobile terminal, to the activation state information field. In addition, it is preferable that the first edge device sequentially assigns the second edge devices corresponding to a sequence stated in the list to each bit in the activation state information field and stores the respective activation state information. As a result of the configuration, only specific second edge devices can be selected and listed, and transfer destinations of the packet can be easily identified.

In the mobile communication access system of the present invention, a preferred aspect of the present invention is that the packet transfer devices decides ports requiring output by the activation state information among output ports retrieved by the label and transfer the packet. As a result of the configuration, only specific second edge devices can be selected and the packet can be transferred.

According to the present invention, in a mobile communication access system that constructs a point-to-multipoint label switch path to allow a mobile terminal and an external network to be connected, via an access network, an edge device is provided. The edge device is connected to the external network and is disposed on an edge of the access network. The edge device is used in the access network with mobile terminal side edge devices and packet transfer devices. The mobile terminal side edge devices can be connected to the mobile terminal and are disposed on an edge of the access network. The packet transfer devices belongs to the access network and relay and transfer a packet. The edge device generates a label within the packet that includes a label value field and an activation state information field. The label value field stores a label value specifying a label switch path. The activation state information field stores activation state information of the mobile terminal side edge devices disposed on the label switch path. In addition, the edge device transmits the packet to the packet transfer devices disposed along the label switch path controlled based on the activation state information. As a result of the configuration, packet replication is kept to a minimum, and a soft handover can be actualized while efficiently using the network.

In addition, in the edge device of the present invention, a preferred aspect of the present invention is that the activation state information is information designating the mobile terminal side edge devices to which the packet should be transferred by a request from the mobile terminal. As a result of the configuration, only specific mobile terminal side edge devices can be selected.

In addition, in the edge device of the present invention, a preferred aspect of the present invention is that the edge device constructs the label switch path using information on the mobile terminal side edge devices having a possibility of communicating with the mobile terminal, of which notification has been given from the mobile terminal. Furthermore, it is preferable that the edge device receives a notification from the mobile terminal of the mobile terminal side edge devices to which the mobile terminal requests the transfer of the packet, among the mobile terminal side edge devices having the possibility of communicating, and stores the respective activation state information of the mobile terminal side edge devices of which the notification has been received in the label. As a result of the configuration, only specific mobile terminal side edge devices requested by the mobile terminal can be selected.

In addition, in the edge device of the present invention, a preferred aspect of the present invention is that the edge device maps the mobile terminal side edge devices having the possibility of communicating with the mobile terminal, listed by the mobile terminal, to the activation state information field. In addition, a preferred aspect of the present invention is that the edge device sequentially assigns the mobile terminal side edge devices corresponding to a sequence stated in the list to each bit in the activation state information field and stores the respective activation state information. As a result of the configuration, only specific mobile terminal side edge devices can be selected and listed, and transfer destinations of the packet can be easily identified.

According to the present invention, in a mobile communication access system that constructs a point-to-multipoint label switch path that allows a mobile terminal and a external network to be connected, via an access network, packet transfer devices are provided. The packet transfer devices are used in the access network with a first edge device and second edge devices. The first edge device is connected to the external network and is disposed on an edge of the access network. The second edge devices can be connected to the mobile terminal and are disposed on an edge of the access network. The packet transfer devices relay and transfer a packet transmitted between the first edge device and the second edge devices. The packet transfer devices decides ports requiring output by the activation state information among output ports retrieved by the label, based on a label generated within the packet by the first edge device, and transfers the packet. The label includes a label value field and an activation state information field. The label value field stores a label value specifying a label switch path. The activation state information field stores activation state information of the second edge devices disposed on the label switch path. As a result of the configuration, packet replication is kept to a minimum, and a soft handover can be actualized while efficiently using the network.

According to the present invention, in a mobile communication access system that constructs a point-to-multipoint label switch path that allows a mobile terminal and a external network to be connected, via an access network, a packet loss reducing method is provided. The packet loss reducing method is used in the access network including a first edge device, second edge devices, and packet transfer devices. The first edge device is connected to the external network and is disposed on an edge of the access network. The second edge devices can be connected to the mobile terminal and are disposed on an edge of the access network. The packet transfer device relay and transfer a packet transmitted between the first edge device and the second edge devices. The packet loss reducing method includes a label generating step, a packet transmitting step, and a packet transferring step. In the label generating step, the first edge device generates a label within the packet that includes a label value field and an activation state information field. The label field stores a label value specifying a label switch path. The activation state information field stores activation state information of the second edge devices disposed on the label switch path. In the packet transmitting step, the first edge device transmits the packet to the packet transfer devices disposed along the label switch path controlled based on the activation state information. In the packet transferring step, the packet transfer devices transfer the packet to the second edge device that is a transfer destination designated by the label switch path. As a result of the configuration, packet replication is kept to a minimum, and a soft handover can be actualized while efficiently using the network.

In addition, in the packet-loss reducing method of the present invention, a preferred aspect of the present invention is that the activation state information is information designating the second edge devices to which the packet should be transferred by a request from the mobile terminal. As a result of the configuration, only specific second edge devices can be selected.

In addition, in the packet-loss reducing method according to the present invention, a preferred aspect of the present invention is that the label generating step includes a path constructing step and an activation state information storing step. In the path constructing step, the first edge device constructs the label switch path using information on the second edge devices having a possibility of communicating with the mobile terminal, of which notification has been given from the mobile terminal, to specify the label switching path. In the activation state information storing step, the first edge device receives a notification from the mobile terminal of the second edge devices to which the mobile terminal requests the transfer of the packet, among the second edge devices having the possibility of communicating with the mobile terminal, and stores the respective activation state information of the second edge devices of which the notification has been received in the label. As a result of the configuration, only specific second edge devices requested by the mobile terminal can be selected.

In the packet-loss reducing method of the present invention, a preferred aspect of the present invention is that the label generating step includes a mapping step and an activation state information storing step. In the mapping step, the first edge device maps the second edge devices having the possibility of communicating with the mobile terminal, listed by the mobile terminal, to the activation state information field. In the activation state information storing step, the first edge device sequentially assigns the second edge devices corresponding to a sequence stated in the list to each bit in the activation state information field and stores the respective activation state information. As a result of the configuration, only specific second edge devices can be selected and listed, and transfer destinations of the packet can be easily identified.

In the packet-loss reducing method of the present invention, a preferred aspect of the present invention is that, in the packet transfer step, the packet transfer device decides ports requiring output by the activation state information among output ports retrieved by the label, based on a label generated within the packet by the first edge device, and transfers the packet to the second edge device that is a transfer destination specified by the label switch path. As a result of the configuration, only specific second edge devices can be selected and the packet can be transferred.

The mobile communication access system, the edge device, the packet transfer device, and the packet loss reducing method of the present invention have the above-described configurations. The mobile communication access system, the edge device, the packet transfer device, and the packet loss reducing method of the present invention can keep packet replication to a minimum and actualize soft handover while efficiently using a network.

### BRIEF DESCRIPTION OF THE DRAWINGS

Fig. 1 is a schematic diagram for explaining a configuration of a mobile communication access system according to an embodiment of the present invention;
Fig. 2 is a sequence chart for explaining an overview of a signaling flow during a soft handover in the mobile communication access system according to the embodiment of the present invention;
Fig. 3 is a diagram of an access network when a point-to-multipoint LSP is constructed in phase 1 of the mobile communication access system according to the embodiment of the present invention;
Fig. 4 is a diagram of an access network over which a packet is transferred based on an activation list in phase 2 of the mobile communication access system according to the embodiment of the present invention;
Fig. 5 is a diagram of another access network over which a packet is transferred based on an activation list in phase 2 of the mobile communication access system according to the embodiment of the present invention;
Fig. 6 is a diagram of another access network over which a packet is transferred based on an activation list in phase 2 of the mobile communication access system according to the embodiment of the present invention;
Fig. 7 is a diagram for explaining a label format in the mobile communication access system according to the embodiment of the present invention;
Fig. 8 is a diagram of an example of a network for explaining a transfer table of a packet relay device (LSR) in the mobile communication access system according to the embodiment of the present invention;
Fig. 9 is a diagram for explaining an attach message including an attach list in the mobile communication access system according to the embodiment of the present invention;
Fig. 10 is a diagram of an example of a Destination map management table held by a packet transfer device (LSR) in the mobile communication access system according to the embodiment of the present invention;
Fig. 11 is a diagram of an example of a transfer table of the packet relay device (LSR) in the mobile communication access system according to the embodiment of the present invention;
Fig. 12 is a flowchart for explaining a process flow during packet reception in the packet transfer device (LSR) of the mobile communication access system according to the embodiment of the present invention;
Fig. 13 is a conventional example actualizing a reduction in packet loss using a plurality of point-to-point LSP; and
Fig. 14 is a conventional example actualizing a reduction in packet loss using point-to-multipoint LSP.

### BEST MODE FOR CARRYING OUT THE INVENTION

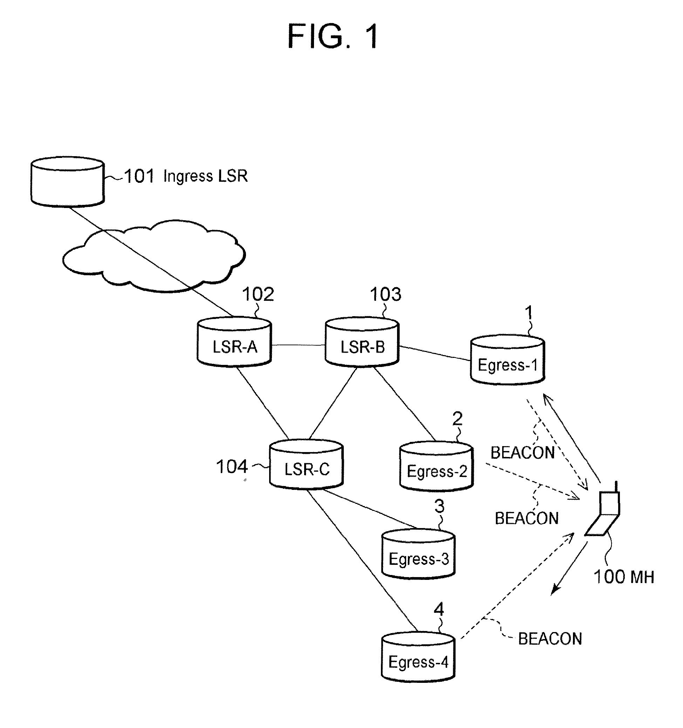

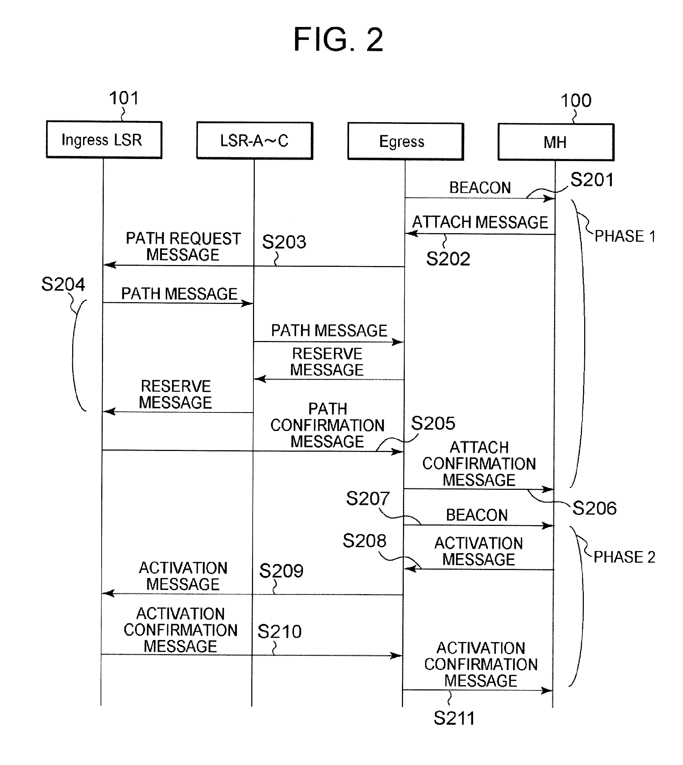

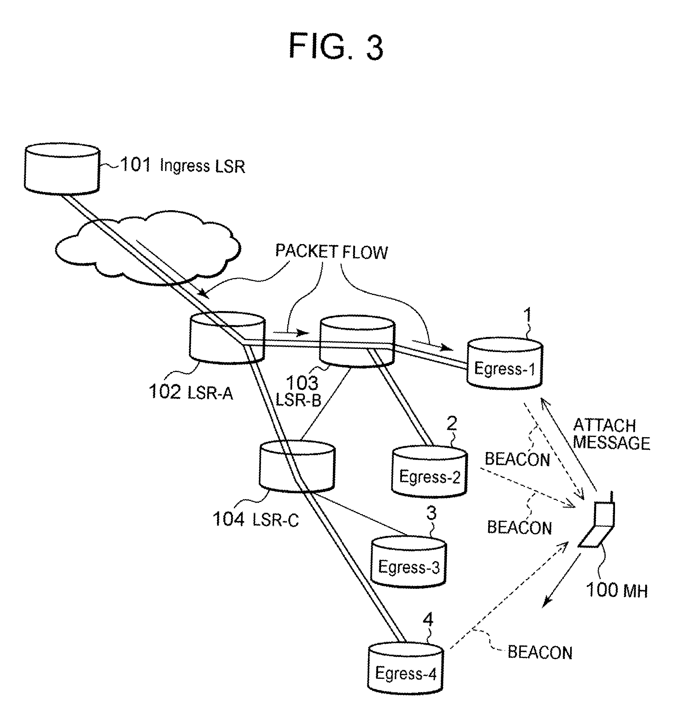

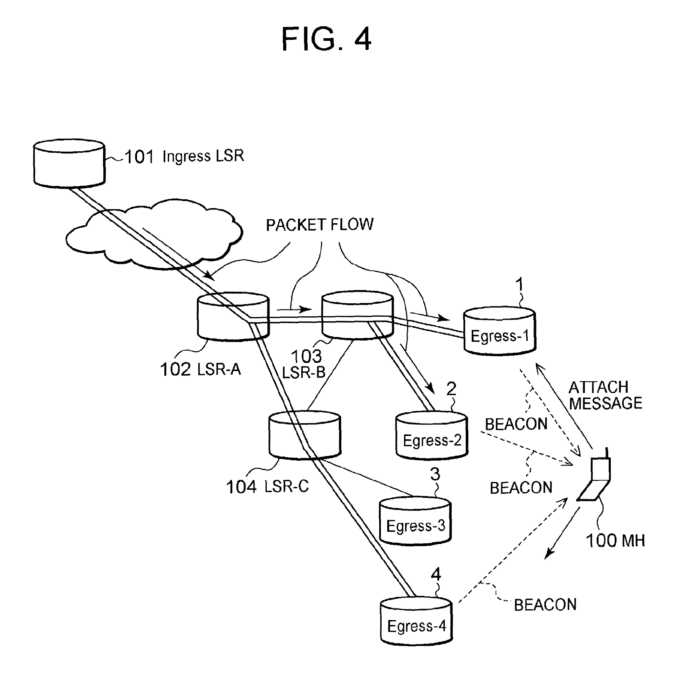

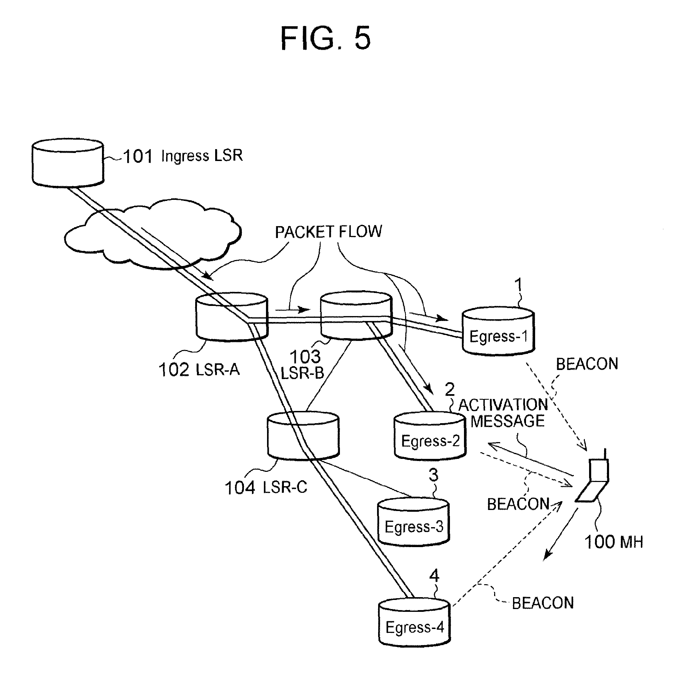

Hereinafter, a mobile communication access system, an edge device, a packet transfer device, and a packet loss reducing method according to the embodiments of the present invention will be described with reference to Fig. 1 to Fig. 12. Fig. 1 is a schematic diagram for explaining a configuration of the mobile communication access system according to an embodiment of the present invention. Fig. 2 is a sequence chart for explaining an overview of a signaling flow during a soft handover in the mobile communication access system according to the embodiment of the present invention. Fig. 3 is a diagram of an access network when a point-to-multipoint LSP is constructed in phase 1 of the mobile communication access system according to the embodiment of the present invention. Fig. 4 is a diagram of an access network over which a packet is transferred based on an activation list in phase 2 of the mobile communication access system according to the embodiment of the present invention. Fig. 5 is a diagram of another access network over which a packet is transferred based on an activation list in phase 2 of the mobile communication access system according to the embodiment of the present invention.

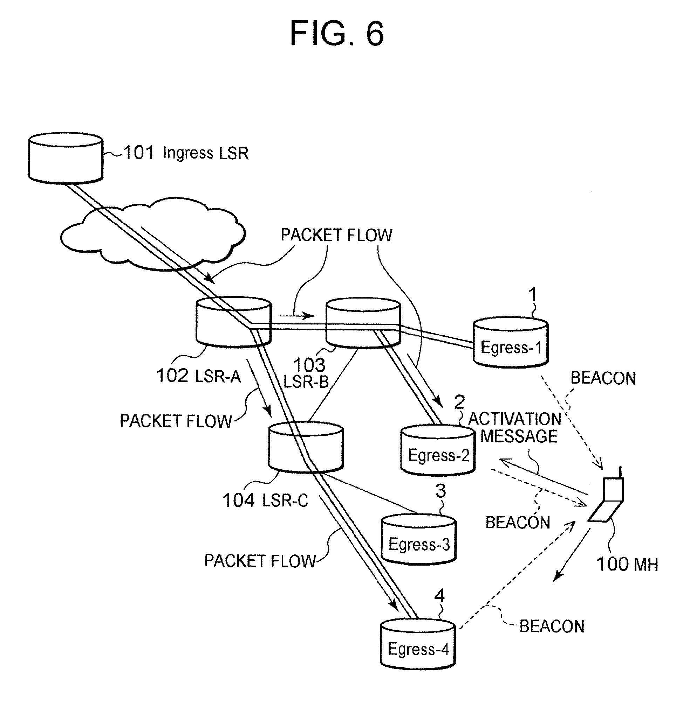

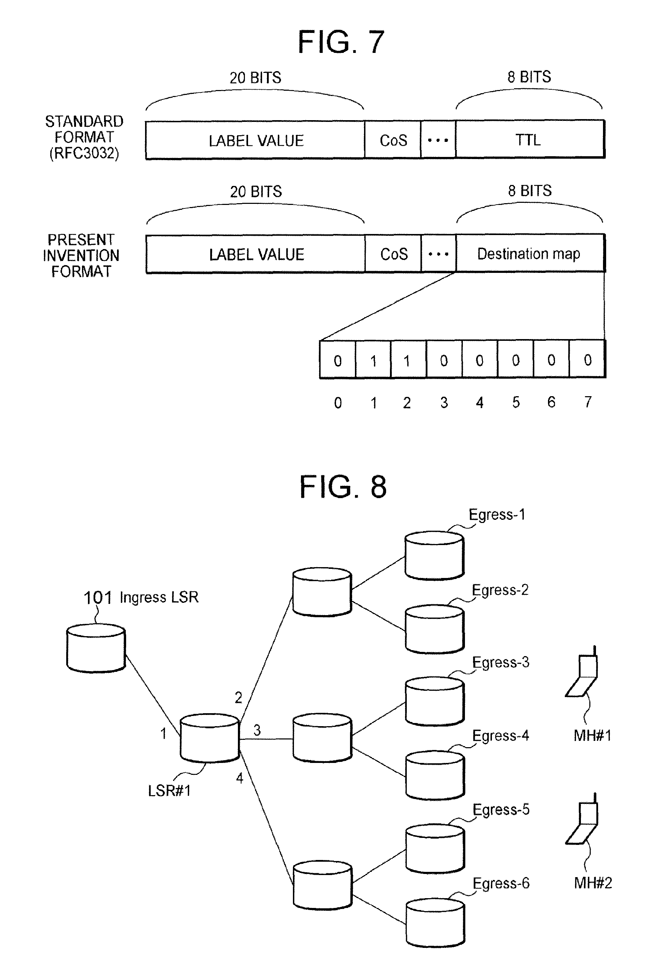

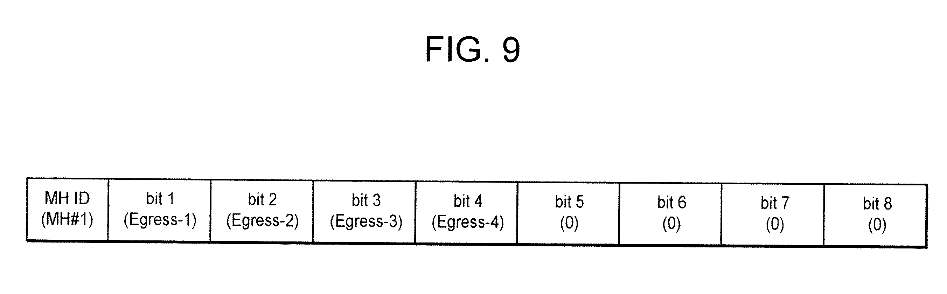

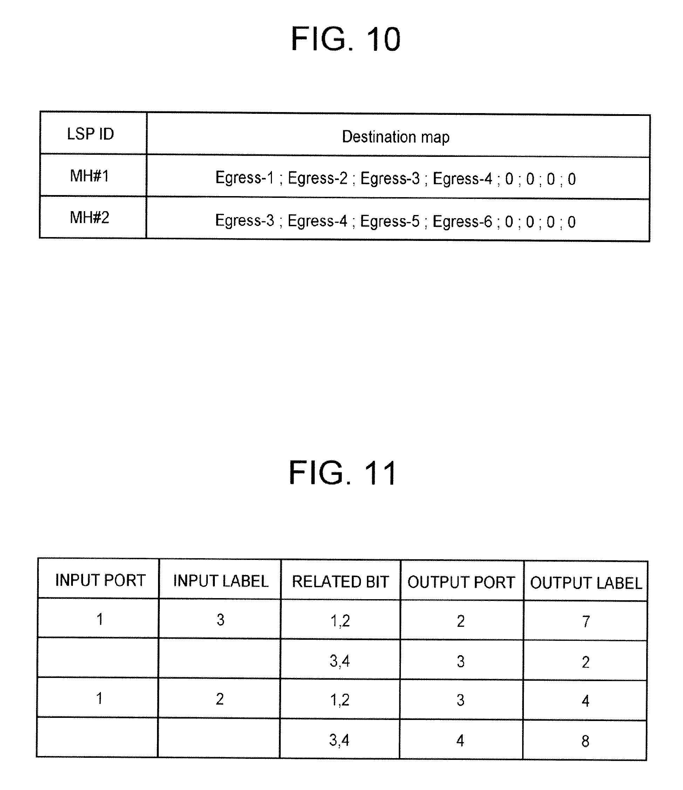

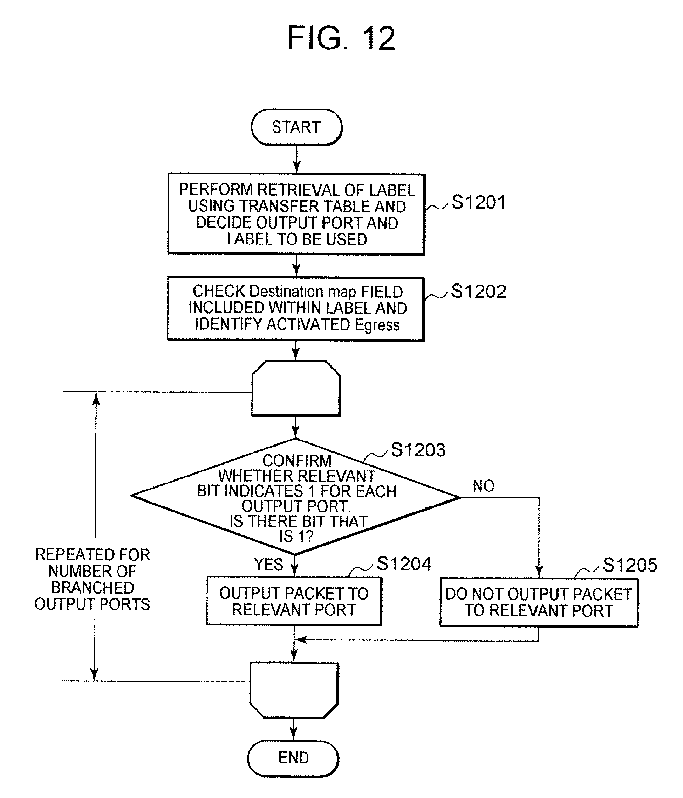

Fig. 6 is a diagram of another access network over which a packet is transferred based on an activation list in phase 2 of the mobile communication access system according to the embodiment of the present invention. Fig. 7 is a diagram for explaining a label format in the mobile communication access system according to the embodiment of the present invention. Fig. 8 is a diagram of an example of a network for explaining a transfer table of a packet relay device (LSR) in the mobile communication access system according to the embodiment of the present invention. Fig. 9 is a diagram for explaining an attach message including an attach list in the mobile communication access system according to the embodiment of the present invention. Fig. 10 is a diagram of an example of a Destination map management table held by a packet transfer device (LSR) in the mobile communication access system according to the embodiment of the present invention. Fig. 11 is a diagram of an example of a transfer table of the packet relay device (LSR) in the mobile communication access system according to the embodiment of the present invention. Fig. 12 is a flowchart for explaining a process flow during packet reception in the packet transfer device (LSR) of the mobile communication access system according to the embodiment of the present invention;

First, the mobile communication access system according to the embodiment of the present invention will be described with reference to Fig. 1. As shown in Fig. 1, the mobile communication access system includes a MH 100 and an access network. The MH 100 is a mobile terminal. The access network includes an Ingress LSR 101, an [Egress-1]1, an [Egress-2]2, an [Egress-3] 3, an [Egress-4] 4, and LSR-A102 to LSR-C104. The Ingress LSR 101 is equivalent to the above-described first edge device. The [Egress-1] 1 to [Egress-4] 4 are equivalent to the above-described second edge devices. The LSR-A102 to LSR-C104 are equivalent to the above-described packet transfer devices. The Ingress LSR 101 is an LSR that is connected to an external device, which is not shown, and disposed on an edge of the access network. The [Egress-1]1 to [Egress-4]4 are LSR that are disposed on the edge of the access network and store the MH 100. The [Egress-1]1 to [Egress-4]4 have a wireless interface or are connected to an external device having a wireless interface. In addition, the [Egress-1]1 to [Egress-4]4 periodically output a signal indicating their own presence. According to the embodiment of the present invention, the [Egress-1]1 to [Egress-4]4 periodically output a beacon. The LSR-A102 to LSR-C104 are LSR that belong to the access network and are disposed in positions other than the edge of the access network. The LSR-A102 to LSR-C104 transfer a packet transmitted and received between the MH 100 and a communication destination of the MH 100 belonging to the external network.

Next, an overview of a signaling flow during a soft handover will be described with reference to Fig. 2. According to the embodiment of the present invention, under the premise of a soft handover using point-to-multipoint, the signaling flow is divided into a construction of a point-to-multipoint path (phase 1) and a process for actually transferring the packet over a required branch LSP among the point-to-multipoint LSP (phase 2). The MH 100 receives and monitors the beacon periodically outputted from the Egress-1 to 4 (Step S201). The MH 100 generates a list, for example, of Egresses having an electric field strength exceeding a threshold value A of a first stage (attach list). The MH 100 transmits an attach message requesting a generation of the point-to-multipoint LSP to, for example, the [Egress-1]1 that is currently in communication, toward the Ingress LSR 101 (Step S202).

The [Egress-1]1 that has received the attach message transmits a path request message requesting point-to-multipoint signaling to the Ingress LSR 101 (Step S203). At this time, the received attach list is included in the path request message. The Ingress LSR 101 performs the construction of the point-to-multipoint LSP based on the attach list included in the received path request message. Specifically, the construction is of the point-to-multipoint LSP using a path message and a reserve message, indicated in the above-described Non-Patent document 2. As shown in Fig. 2, the path message and the reserve message are exchanged between the Ingress LSR 101 and the Egress on the attach list (Step S204). The Ingress LSR 101 transmits a path confirmation message confirming that the construction of the point-to-multipoint LSP has been completed to the Egress that outputted the path request (Step S205). Then, the Egress that has received the path confirmation message transmits an attach confirmation message confirming the LSP construction to the MH 100 (S206).

Next, the MH 100 receives and monitors the beacon periodically outputted from the Egress on the attach list (Step S207). The MH 100 generates a list, for example, of Egresses having an electric field strength exceeding a threshold value B of a second stage (activation list). The MH 100 transmits an activation message requesting an actual packet transfer to the [Egress-1]1 that is currently in communication (Step S208). The [Egress-1]1 that has received the activation message transmits the activation message including the activation list to the Ingress LSR 101 (Step S209). The Ingress LSR 101 that has received the activation message including the activation list transmits an activation confirmation message for confirmation to the Egress (Step S210). The Egress that has received the activation confirmation message transmits the activation confirmation message to the MH 100 (Step S211). The Ingress LSR 101 that has received the activation message generates a label including information indicating a packet transfer to a relevant Egress, based on the received activation list. The Ingress LSR 101 inserts the label in the packet and starts the packet transfer. A format of the above-described label will be described hereafter.

In this way, the configuration is that in which the construction of the point-to-multipoint LSP, which is time-consuming, is completed in advance. Subsequently, the Egress of which activation is desired is selected from among the Egresses within the point-to-multipoint LSP, merely by the Egress being indicated to the Ingress LSR 101. The packet is replicated and transferred. As a result of the configuration, actual packet replication can be kept to a minimum and a soft handover can be actualized while efficiently using the access network, even when the MH 100 is moving at a high speed.

Here, a configuration of the access network in the above-described phase 1 and phase 2 will be described with reference to Fig. 3 to Fig. 6. Fig. 3 is a diagram of the access network when the point-to-multipoint LSP is constructed in phase 1. Fig. 3 shows the point-to-multipoint LSP constructed based on an attach list of the [Egress-1]1, the [Egress-2]2, and the [Egress-4] generated by the MH 100 that has received the beacons from the [Egress-1] 1, the [Egress-2] 2, and the [Egress-4]4. Fig. 4 to Fig. 6 are diagrams of the access network over which the packet is transferred based on the activation list in phase 2. Fig. 4 shows the packet also being transferred to the [Egress-2]2 based on the activation list of the [Egress-1] 1 and the [Egress-2]2 generated by the MH 100 that has received the beacons from the [Egress-1]1 and the [Egress-2]2, after the point-to-multipoint LSP has been constructed in phase 1.

Fig. 5 shows when the communication partner changes from [Egress-1]1 to [Egress-2]2 because of the movement of the MH 100. Fig. 5 shows the activation list of the [Egress-2]2 and the [Egress-4]4 being generated, and the activation message including the activation list being transmitted to the [Egress-2]2 toward the Ingress LSR 101. Fig. 6 shows the packet also being transferred to the [Egress-4] 4 based on the activation list of the [Egress-2]2 and the [Egress-4] 4 generated by the MH 100.

The format of the above-described label for packet transfer used in the present invention will be described with reference to Fig. 7. In the access network targeted by the present invention, because the LSP is handled as a layer 2 tunnel, a Time To Live (TTL) field specified in a standard format is not required to be used. Therefore, eight bits of the TTL field are used as pointers indicating each Egress. Correspondence between each bit and Egress are generated and managed by the MH 100 receiving the beacon. Specifically, the MH 100 that has received the beacon selects and lists a maximum of eight Egresses by electric field strength or the like. The list is the above-described attach list. A sequence of the listed Egresses and the bits in a Destination map field shown in Fig. 7 correspond, one-to-one. However, the Destination map does not necessarily have to use the TTL field. Another label or field can be used, such as a new label indicating the Destination map being stacked.

The MH 100 uses the attach list when transmitting the attach message. Therefore, each LSR on the point-to-multipoint LSP, constructed based on the Egress receiving the attach message and the attach list, hold mapping information in which the above-described Egresses and the respective bits are corresponded one-to-one. 0 or 1 is inserted into each bit. 0 means that the packet transfer to the corresponding Egress is not performed. 1 means that the packet transfer to the corresponding Egress is performed. In phase 2, the MH 100 generates a list of Egresses actually requesting the packet transfer (activation list) and notifies the Ingress LSR 101 of the activation list. The Ingress LSR 101 performs the packet transfer using a label in which the relevant bits in the Destination map mapped to the relevant Egresses are set to 1 and the other bits are set to 0.

Each LSR (LSR-A102 to LSR-C104) decides an output port by the label during packet reception. In addition, each LSR (LSR-A102 to LSR-C104) judges whether to actually transfer the packet to the output port using the Destination map field. The judgment is made by a check of whether the bit of the relevant Egress is activated. When the bit is activated (the bit is set to 1), the packet is transferred to the output port.

Here, a transfer table held by each LSR and a packet transfer processing method in a certain access network configuration will be described in detail, with reference to Fig. 8 to Fig. 11. Fig. 8 shows an example of a network for explaining a transfer table of, for example, an LSR #1. The network has a configuration in which a MH #1 and a MH #2 are connected to Egress-1 to Egress-6. The MH #1 and the MH #2 generate an attach list based on the Egresses exceeding the threshold value A. Fig. 9 shows an attach message including the generated attach list. The MH #1 generates the attach message of the Egress-1 to Egress-4. The MH #2 generates the attach message of the Egress-3 to Egress-6. The MH #1 and the MH #2 perform mapping of each Egress to the Destination map during attach list generation and manage each bit and the corresponding Egress. According to the embodiment of the present invention, the example is that in which the Destination map includes eight bits. Therefore, each MH manages the correspondence between a maximum of eight Egresses and the respective bits. Fig.9 indicates that the first bit of the Destination map is specified as a bit indicating a packet transfer/stop to the Egress-1.

Next, a process when the point-to-multipoint LSP is constructed for the MH #1 using the attach list and a configuration of the transfer table in LSR #1 will be described. The Ingress LSR 101 that has received the path request message shown in Fig. 2 transmits the path message including the attach list. The LSR #1 has a table for managing the bit to which each Egress, the Egress-1 to Egress-4, is assigned on the attach list of the MH #1. Therefore, as shown in Fig. 10, the mapping is held by ID for each MH. After the label to be used for each output port is decided by a reception of the reserve message, the LSR #1 itself gives notification of the label of which use is requested to the upper-level Ingress LSR 101, through the reserve message. Then, the transfer table for transfer, such as that shown in Fig. 11, is generated. In the present invention, in addition to a table expressing ordinary input and output relationships of the labels, related bits are added. The transfer table shows the relationship of the Egresses connected to an end of the output port with the bits shown in the attach list. In the example in Fig. 11, the Egress-1 and the Egress-2 connected to the end of an output port 2 are indicated, and bit 1 and bit 2 are indicated as related bits.

Next, a process flow during the packet reception in the LSR #1 will be described with reference to Fig. 12. Upon receiving the packet, the LSR #1 performs a retrieval of the label using the transfer table and decides the output port and the label to be used (Step S1201). Then, the LSR #1 checks the Destination map field included within the label and identifies an activated Egress indicating packet transfer (Step S1202). The LSR #1 can perform the identification by the relevant bit in the bit map held for each MH indicating 1. The transfer table holds the related bits for each output port. Therefore, the LSR #1 confirms whether the relevant bit indicates 1 by output port (Step S1203). If even one bit indicates 1, the LSR #1 outputs the packet to the relevant output port, based on the transfer table (Step S1204). However, if all bits indicated by the related bits are set to 0, the LSR #1 does not perform the output of the packet to the relevant ports (Step S1205).

In this way, the packet replication can be controlled in packet units by the LSR to become the branch point for the constructed point-to-multipoint. As a result, by merely the bits in the Destination map being changed by the Ingress LSR 101, the path over which the packet flows can be controlled without performing signaling to the path.

The embodiment of the present invention has been described above. Following aspects of the present invention are also possible.

As a first aspect, a following mobile communication access system is provided. The mobile communication access system includes a mobile terminal and an access network. The mobile communication access system is configured so that the access network connects the mobile terminal and an external ISP network by a layer 2 tunnel. The mobile communication access system includes a first edge device, second edge devices, and packet transfer devices. The first edge device is connected to the external ISP network and disposed on an edge of the access network. The second edge devices are disposed on the edge of the access network and receive the mobile terminal. The packet transfer devices belong to the access network and are disposed in positions other than the edge of the access network. The packet transfer devices transfer a packet transmitted and received between the mobile terminal and a communication destination of the mobile terminal belonging to the external ISP network. The mobile terminal receives second edge device information outputted from the second edge devices. Based on the received second edge device information, the mobile terminal generates an attach list that is a list of the second edge devices. The mobile terminal transmits an attach message including the generated attach list and requesting that a point-to-multipoint label switch path be generated to a communication edge device that is currently in communication, among the second edge devices. The communication edge device transmits a path request message including the attach list toward the first edge device, based on the received attach message. The first edge device performs a construction of the point-to-multipoint label switch path based on the attach list included in the received path request message. After the point-to-multipoint label switch path is constructed, the mobile terminal receives the second edge device information outputted from the second edge devices. Based on the received second edge device information, the mobile terminal generates an activation list that is a list of the second edge devices. The mobile terminal transmits an activation message including the generated activation list and requesting that the packet transfer only be performed to the second edge devices on the activation list to the communication edge device. The communication edge device transmits the received activation message toward the first edge device. The first edge device generates a label indicating a packet transfer to the relevant second edge device and inserts the label in the packet, based on the activation list included in the received activation message, and transmits the packet to which the label has been inserted over the constructed label switch path. The packet transfer device to become the branch point of the label switch path judges whether to output the packet to the constructed label switch path, based on the label included in the received packet. As a result of the configuration, packet replication can be kept to a minimum and a soft handover can be actualized while efficiently using the network.

In addition, in the mobile communication access system, a preferred aspect is that the mobile terminal generates the attach list and the activation list only when the second edge device information received from the second edge devices satisfies predetermined conditions. As a result of the configuration, only specific second edge devices are selected and listed.

In addition, in the mobile communication access system, a preferred aspect is that the second edge devices on the attach list are mapped to the label. As a result of the configuration, the packet transfer destination can be easily identified.

As a second aspect, following packet transfer devices are provided. The packet transfer devices are included in a mobile communication access system including a mobile terminal and an access network. The mobile communication access system is configured so that the access network connects the mobile terminal and an external ISP network by a layer 2 tunnel. The mobile communication access system includes a first edge device, second edge devices, and the packet transfer devices. The first edge device is connected to the external ISP network and disposed on an edge of the access network. The second edge devices are disposed on the edge of the access network and receive the mobile terminal. The packet transfer devices belong to the access network and are disposed in positions other than the edge of the access network. The packet transfer devices transfer a packet transmitted and received between the mobile terminal and a communication destination of the mobile terminal belonging to the external ISP network. The mobile terminal receives second edge device information outputted from the second edge devices. Based on the received second edge device information, the mobile terminal generates an attach list that is a list of the second edge devices. The mobile terminal transmits an attach message including the generated attach list and requesting that a point-to-multipoint label switch path be generated to a communication edge device that is currently in communication, among the second edge devices. The communication edge device transmits a path request message including the attach list toward the first edge device, based on the received attach message. The first edge device performs a construction of the point-to-multipoint label switch path based on the attach list included in the received path request message. After the point-to-multipoint label switch path is constructed, the mobile terminal receives the second edge device information outputted from the second edge devices. Based on the received second edge device information, the mobile terminal generates an activation list that is a list of the second edge devices. The mobile terminal transmits an activation message including the generated activation list and requesting that the packet transfer only be performed to the second edge devices on the activation list to the communication edge device. The communication edge device transmits the received activation message toward the first edge device. The first edge device generates a label indicating a packet transfer to the relevant second edge device and inserts the label in the packet, based on the activation list included in the received activation message, and transmits the inserted packet over the constructed label switch path. In this case, the packet transfer devices include a judging means for judging whether to output the packet to a constructed label switch path, based on a label included in the packet transmitted from the first edge device. As a result of the configuration, packet replication can be kept to a minimum and a soft handover can be actualized while efficiently using the network.

As a third aspect, a following packet loss reducing method is provided. The packet loss reducing method is used in a mobile communication access system including a mobile terminal and an access network. The mobile communication access system is configured so that the access network connects the mobile terminal and an external ISP network by a layer 2 tunnel. The mobile communication access system includes a first edge device, second edge devices, and packet transfer devices. The first edge device is connected to the external ISP network and disposed on an edge of the access network. The second edge devices are disposed on the edge of the access network and receive the mobile terminal. The packet transfer devices belong to the access network and are disposed in positions other than the edge of the access network. The packet transfer devices transfer a packet transmitted and received between the mobile terminal and a communication destination of the mobile terminal belonging to the external ISP network. The packet loss reducing method includes a step at which the mobile terminal receives second edge device information outputted from the second edge devices. Based on the received second edge device information, the mobile terminal generates an attach list that is a list of the second edge devices. The mobile terminal transmits an attach message including the generated attach list and requesting that a point-to-multipoint label switch path be generated to a communication edge device that is currently in communication, among the second edge devices. The packet loss reducing method also includes a step at which the communication edge device transmits a path request message including the attach list toward the first edge device, based on the received attach message. The packet loss reducing method also includes a step at which the first edge device performs a construction of the point-to-multipoint label switch path based on the attach list included in the received path request message. The packet loss reducing method also includes a step at which, after the point-to-multipoint label switch path is constructed, the mobile terminal receives the second edge device information outputted from the second edge devices. Based on the received second edge device information, the mobile terminal generates an activation list that is a list of the second edge devices. The mobile terminal transmits an activation message including the generated activation list and requesting that the packet transfer only be performed to the second edge devices on the activation list to the communication edge device. The packet loss reducing method also includes a step at which the communication edge device transmits the received activation message toward the first edge device. The packet loss reducing method also includes a step at which the first edge device generates a label indicating a packet transfer to the relevant second edge device and inserts the label in the packet, based on the activation list included in the received activation message, and transmits the packet to which the label has been inserted over the constructed label switch path. The packet loss reducing method also includes a step at which the packet transfer device to become the branch point of the label switch path judges whether to output the packet to the constructed label switch path, based on the label included in the received packet. As a result of the configuration, packet replication can be kept to a minimum and a soft handover can be actualized while efficiently using the network.

In addition, in the packet loss reducing method, a preferred aspect is that the mobile terminal generates the attach list and the activation list only when the second edge device information received from the second edge devices satisfies predetermined conditions. As a result of the configuration, only specific second edge devices are selected and listed.

In addition, in the packet loss reducing method, a preferred aspect is that the second edge devices on the attach list are mapped to the label. As a result of the configuration, the packet transfer destination can be easily identified.

The mobile communication access system, the packet transfer devices, and the packet loss reducing method according to the above-described aspects have the above-described configurations. The mobile communication access system, the packet transfer device, and the packet loss reducing method can keep packet replication to a minimum and actualize a soft handover while efficiently using the network.

### INDUSTRIAL APPLICABILITY

The mobile communication access system, the edge device, the packet transfer device, and the packet loss reducing method according to the present invention can keep packet replication to a minimum and actualize a soft handover while efficiently using the network. Therefore, the mobile communication access system, the edge device, the packet transfer device, and the packet loss reducing method are useful in a mobile communication access system, an edge device, a packet transfer device, a packet loss reducing method, and the like performing a handover control using soft handover when a label switch technology that transfers data using a label, such as MPLS, is applied to a mobile terminal.

## Claims

1. A mobile communication access system constructing a point-to-multipoint label switch path to allow a mobile terminal and an external network to be connected via an access network, wherein:
the access network includes
a first edge device that is connected to the external network and is disposed on an edge of the access network,
second edge devices that can be connected to the mobile terminal and are disposed on an edge of the access network, and
packet transfer devices that belong to the access network and relay and transfer a packet transmitted between the first edge device and the second edge devices;
the first edge device
generates a label within the packet that includes a label value field storing a label value specifying a label switch path and an activation state information field storing activation state information of the second edge devices disposed on the label switch path, and
transmits the packet to the packet transfer devices disposed along the label switch path controlled based on the activation state information; and
the packet transfer devices
transfer the packet to the second edge device that is a transfer destination designated by the label switch path.

2. The mobile communication access system according to claim 1, wherein:
the activation state information is information designating the second edge devices to which the packet should be transferred by a request from the mobile terminal.

3. The mobile communication access system according to claim 1, wherein:
the first edge device
constructs the label switch path using information on the second edge devices having a possibility of communicating with the mobile terminal, of which notification has been given from the mobile terminal, and
receives a notification from the mobile terminal of the second edge devices to which the mobile terminal requests the transfer of the packet, among the second edge devices having the possibility of communicating with the mobile terminal, and stores the respective activation state information of the second edge devices of which the notification has been received in the label.

4. The mobile communication access system according to claim 1, wherein:
the first edge device
maps the second edge devices having the possibility of communicating with the mobile terminal, listed by the mobile terminal, to the activation state information field, and
sequentially assigns the second edge devices corresponding to a sequence stated in the list to each bit in the activation state information field and stores the respective activation state information.

5. The mobile communication access system according to claim 1, wherein:
the packet transfer devices transfer the packet to ports requiring output by the activation state information among output ports retrieved by the label.

6. An edge device that, in a mobile communication access system constructing a point-to-multipoint label switch path to allow a mobile terminal and an external network to be connected, via an access network, is connected to the external network, disposed on an edge of the access network, and used in the access network with mobile terminal side edge devices that can be connected to the mobile terminal and are disposed on an edge of the access network and packet transfer devices that belong to the access network and relay and transfer a packet, wherein:
the edge device
generates a label within the packet that includes a label value field storing a label value specifying a label switch path and an activation state information field storing activation state information of the mobile terminal side edge devices disposed on the label switch path, and
transmits the packet to the packet transfer devices disposed along the label switch path controlled based on the activation state information.

7. The edge device according to claim 6, wherein:
the activation state information is information designating the mobile terminal side edge devices to which the packet should be transferred by a request from the mobile terminal.

8. The edge device according to claim 6, wherein:
the edge device
constructs the label switch path using information on the mobile terminal side edge devices having a possibility of communicating with the mobile terminal, of which notification has been given from the mobile terminal, and
receives a notification from the mobile terminal of the mobile terminal side edge devices to which the mobile terminal requests the transfer of the packet, among the mobile terminal side edge devices having the possibility of communicating and stores the respective activation state information of the mobile terminal side edge devices of which the notification has been received in the label.

9. The edge device according to claim 6, wherein
the edge device
maps the mobile terminal side edge devices having the possibility of communicating with the mobile terminal, listed by the mobile terminal, to the activation state information field, and
sequentially assigns the mobile terminal side edge devices corresponding to a sequence stated in the list to each bit in the activation state information field and stores the respective activation state information.

10. Packet transfer devices that, in a mobile communication access system constructing a point-to-multipoint label switch path to allow a mobile terminal and an external network to be connected, via an access network, are used in the access network with a first edge device connected to the external network and disposed on an edge of the access network and second edge devices that can be connected to the mobile terminal and are disposed on an edge of the access network, and relay and transfer a packet transmitted between the first edge device and the second edge devices, wherein:
the packet transfer devices transfer the packet to ports requiring output by the activation state information among output ports retrieved by the label, based on a label generated within the packet by the first edge device including a label value field storing a label value specifying a label switch path and an activation state information field storing activation state information of the second edge devices disposed on the label switch path.

11. A packet loss reducing method that, in a mobile communication access system constructing a point-to-multipoint label switch path to allow a mobile terminal and an external network to be connected, via an access network, is used in the access network including a first edge device that is connected to the external network and is disposed on an edge of the access network, second edge devices that can be connected to the mobile terminal and are disposed on an edge of the access network, and packet transfer devices that relay and transfer a packet transmitted between the first edge device and the second edge devices, the packet loss reducing method comprising:
a label generating step of generating, by the first edge device, a label within the packet that includes a label value field storing a label value specifying a label switch path and an activation state information field storing activation state information of the side edge devices disposed on the label switch path;
a packet transmitting step of transmitting, by the first edge device, the packet to the packet transfer devices disposed along the label switch path controlled based on the activation state information, and
a packet transferring step of transferring, by the packet transfer devices, the packet to the second edge device that is a transfer destination designated by the label switch path.

12. The packet loss reducing method according to claim 11, wherein:
the activation state information is information designating the second edge devices to which the packet should be transferred by a request from the mobile terminal.

13. The packet loss reducing method according to claim 11, wherein:
the label generating step includes
a path constructing step of constructing, by the first edge device, the label switch path using information on the second edge devices having a possibility of communicating with the mobile terminal, of which notification has been given from the mobile terminal, to specify the label switching path; and
an activation state information storing step of receiving, by the first edge device, a notification from the mobile terminal of the second edge devices to which the mobile terminal requests the transfer of the packet, among the second edge devices having the possibility of communicating with the mobile terminal, and storing the respective activation state information of the second edge devices of which the notification has been received in the label.

14. The packet loss reducing method according to claim 11, wherein:
the label generating step includes
a mapping step of mapping, by the first edge device, the second edge devices having the possibility of communicating with the mobile terminal, listed by the mobile terminal, to the activation state information field, and
an activation state information storing step of sequentially assigning, by the first edge device, the second edge devices corresponding to a sequence stated in the list to each bit in the activation state information field and storing the respective activation state information.

15. The packet loss reducing method according to claim 11, wherein:
in the packet transfer step, the packet transfer device decides ports requiring output by the activation state information among output ports retrieved by the label and transfers the packet to the second edge device that is a transfer destination specified by the label switch path.
